# EUROPÄISCHE PATENTSCHRIFT

(11) **EP 3 733 366 B1**
(45) Veröffentlichungstag und Bekanntmachung des Hinweises auf die Patenterteilung: **16.11.2022**
(21) Anmeldenummer: 19171901.2
(22) Anmeldetag: 30.04.2019
(51) Int. Cl.: B27N 1/00, B27N 3/00, C08L 61/28, C08L 97/02

(54) **BINDEMITTEL ZUR HERSTELLUNG VON HOLZWERKSTOFFEN**
ADHESIVE FOR MANUFACTURE OF WOOD BOARDS
LIANT DESTINÉ À LA FABRICATION DE MATÉRIAUX DÉRIVÉ DU BOIS

(43) Veröffentlichungstag der Anmeldung: 04.11.2020
(73) Patentinhaber: Fritz Egger GmbH & Co. OG, 6380 St. Johann in Tirol (AT)
(72) Erfinder: KUNCINGER, Thomas, 1200 Wien (AT); GEYER, Andreas, 3500 Krems (AT)
(74) Vertreter: Cohausz & Florack

(56) Entgegenhaltungen:
- EP-A2- 0 352 558
- WO-A1-2018/054732
- DE-A1- 2 336 381
- DE-C1- 3 644 397
- US-A- 4 417 916
- ZA-B- 200 109 297

## Beschreibung

### TECHNISCHER BEREICH DER ERFINDUNG

Die Erfindung betrifft eine Bindemittelzusammensetzung und ein Verfahren zur Herstellung von Holzwerkstoffen, sowie damit bzw. dadurch hergestellte Holzwerkstoffe. Ferner betrifft die Erfindung die Verwendung von Ligninsulfonat in einer Bindemittelzusammensetzung als Emulgator und Reaktivphasenvermittler zwischen einem Polyisocyanat und einem Aminoplastharz. Schließlich umfasst die Erfindung die Verwendung der erfindungsgemäßen Bindemittelzusammensetzung als Flächenleim.

### HINTERGUND DER ERFINDUNG

Die Herstellung von Holzwerkstoffen wie Span-, Faser- oder OSB-Platten erfolgt durch "Verkleben" von Holzteilchen (beispielsweise Spänen, Fasern oder Strands) mit Bindemittel. Zur Herstellung von beispielsweise Span-, Faser- oder OSB-Platten wird zunächst lignocellulosehaltiges Material in Form von Spänen, Fasern oder Strands bereitgestellt und mit Bindemittel versehen. Danach folgt die Bildung einer beleimten Span-, Faser- bzw. Strandmatte, die durch in Takt oder kontinuierlich arbeitenden Pressen unter Hitze und Druck zu einer Platte gepresst wird. In der Presse erfolgt die Aushärtung, d.h. die im Wesentlichen vollständige Vernetzung des Bindemittels bzw. der Bindemittelzusammensetzung.

Bei der Herstellung von Holzwerkstoffen kommen aufgrund ihrer Kostengünstigkeit und guten mechanischen Eigenschaften immer noch vorwiegend aminoplastbasierte Bindemittel zur Anwendung. Um diese Bindemittel zu stabilisieren und zu verstärken sowie zur Verbesserung der Prozessstabilität, wird dem Aminoplastharz als weiterer Bestandteil ein Polyisocyanat, oftmals polymeres Diphenylmethandiisocyanat (PMDI), zugesetzt. Wenn hier von Prozessstabilität die Rede ist, so ist damit insbesondere die Gewährleistung eines unbeeinträchtigten Produktionsprozesses durch die Produktionsanlage gemeint, ohne dass die Anlage durch den Produktionsprozess selbst zunehmend in ihrer Funktion beeinträchtigt wird und die hergestellten Holzwerkstoffe eine gleichbleibende, gewünschte Qualität aufweisen. Die Verbesserung der Prozessstabilität kann beispielsweise durch Verhinderung des Anklebens von beleimten lignocellulosehaltigen Partikeln an Förderbänder und/oder Streuvorrichtungen erfolgen. Üblicherweise wird beispielsweise PMDI in der Größenordnung 0,5% PMDI fest/atro Holz eingesetzt. Die Zugabe geringer Mengen PMDI zu Aminoplastharzen reduziert oder verhindert ein Ankleben von lignocellulosehaltigen Partikeln, die mit einem Aminoplastharz beleimt wurden, an Förderbänder und/oder Streuvorrichtungen der Produktionsanlage.

Polyisocyanate wirken zudem als Beschleuniger und Verstärker für Aminoplastharze. Dies beruht nicht zuletzt darauf, dass die Reaktion von Isocyanatgruppen mit beispielsweise den Methylolgruppen eines Harnstoff-Formaldehyd-Harzes um eine Zehnerpotenz rascher erfolgt als deren Reaktion mit Wasser (Dunky, Niemz "Holzwerkstoffe und Leime", Springer Verlag 2002, Teil I, S. 282-283). Des Weiteren ermöglichen Polyisocyanate in aminoplastbasierten Bindemitteln eine zusätzliche Quervernetzung des aminoplastischen Harzes.

Die Wirkung von Polyisocyanaten als Beschleuniger und Verstärker für aminoplastbasierte Bindemittel hat ebenfalls einen förderlichen Einfluss auf die Prozessstabilität der Holzwerkstoffproduktion. Ohne an eine wissenschaftliche Theorie gebunden sein zu wollen, scheint sich die prozessstabilisierende Wirkung der Polyisocyanate auch dadurch zu erklären, dass die Polyisocyanate durch Eigenvernetzung und durch Reaktion mit dem Aminoplastharz für einen Grad an Vorvernetzung sorgen, welches für den weiteren Herstellungsprozess förderlich ist, beispielsweise dadurch, dass beim Herstellen von Holzfaserplatten ein Ankleben der Fasermatten an Bauteile der Produktionsanalage verhindert wird.

Nachteilig an dem Einsatz von Polyisocyanat in den gattungsgemäßen Bindemittelzusammensetzungen ist, dass Polyisocyanat als erdölbasierender Bindemittelbestandteil einen Umweltfaktor und als teurer Rohstoff einen erheblichen Kostenfaktor in der Holzwerkstoffherstellung darstellt. Demnach ist die Holzwerkstoffindustrie bestrebt, den Anteil von Polyisocyanaten in Bindemittelzusammensetzungen möglichst gering zu halten.

Gleichwohl sind im Stand der Technik keine praxisgerechten Möglichkeiten vorgeschlagen worden, die PMDI-Zugabe zu aminoplastischen Bindemitteln reduzieren zu können, ohne Einbußen bei der prozessstabilisierenden Wirkung des PMDI in Kauf zu nehmen. Üblicherweise wird das PMDI nur in geringen Mengen dem aminoplastischen Bindemittel zugegeben (typischerweise ca. 0,5 Gew.-% auf atro Holz). Diese geringen Mengen scheinen jedoch unverzichtbar, um die Vorteile im Hinblick auf die Prozessstabilisierung sicher gewährleisten zu können. Eine Verringerung der PMDI-Menge war bislang mit einer Verschlechterung der mechanischen Eigenschaften, der Quelleigenschaften und/oder der Wasseraufnahme der erhaltenen Holzwerkstoffe und/oder der Prozessstabilität des Herstellungsverfahrens verbunden.

WO 2018/054732 A1 offenbart eine Bindemittelzusammensetzung zur Herstellung von Holzwerkstoffen enthaltend die folgenden Bestandteile: Aminoplastharz, Polyisocyanat und Ligninsulfonat.

Insgesamt sind aus dem Stand der Technik keine Ansätze bekannt, den Einsatz von Polyisocyanaten zur Prozessstabilität bei der Produktion von aminoplastisch gebundenen Holzwerkstoffen, zu erniedrigen. Ebenso wenig sind Ansätze bekannt, den PMDI-Gehalt in aminoplastbasierten Bindemitteln zu erniedrigen bei gleichzeitiger Gewährleistung von dessen Funktion als Beschleuniger und Verstärker in diesen Bindemittelzusammensetzungen sowie bei gleichzeitiger Bewahrung der mechanischen Eigenschaften, der Quelleigenschaften und/oder der Wasseraufnahme der erhaltenen Holzwerkstoffe. Bisher wurden im Stand der Technik die erhöhten Produktionskosten durch Einsatz von PMDI in aminoplastbasierten Bindemitteln in Kauf genommen.

Vor diesem Hintergrund bestand die Aufgabe der Erfindung darin, den Kosten- und Umweltfaktor, den der Einsatz von Polyisocyanat in aminoplastbasierten Bindemitteln darstellt, zu erniedrigen, indem der Polyisocyanatanteil derartiger Bindemittelzusammensetzungen reduziert wird. Gleichzeitig sollte jedoch die polyisocyanatvermittelte Prozessstabilität und dessen Wirkung als Beschleuniger und Verstärker in der aminoplastbasierten Bindemittelzusammensetzung sowie die guten mechanischen Eigenschaften, die Quelleigenschaften und/oder die Wasseraufnahme der erhaltenen Holzwerkstoffe bewahrt bleiben.

Es war somit eine Aufgabe der Erfindung, ein geeignetes kostengünstiges und umweltverträgliches (Teil-)Substitut für die Polyisocyanatzugabe zu aminoplastbasierten Bindemitteln aufzuzeigen. Insbesondere sollte ein Additiv gefunden werden, welches in gewissem Umfang die gleiche Wirkung wie Polyisocyanate bei Aminoplastharzen entfaltet und/oder es ermöglicht, Polyisocyanate und Aminoplastharze wirkungsvoller miteinander zu kombinieren. Die Polyisocyanatmengen in aminoplastbasierten Bindemitteln sollte auf ein Minimum reduziert werden können insbesondere im Hinblick auf ein reibungsloses Herstellungsverfahren sowie eine Beschleunigung und Verstärkung der Vernetzungsreaktion.

Insgesamt ist daher die Aufgabe der Erfindung darin zu sehen, polyisocyanathaltige aminoplastbasierte Bindemittelzusammensetzungen weiter zu verbessern. Insbesondere soll eine kostengünstigere und umweltverträglichere Bindemittelzusammensetzung, welche Aminoplastharz und Polyisocyanat enthält, bereitgestellt werden, mit der es durch ein einfaches und wirtschaftlich effektives Verfahren möglich ist, Holzwerkstoffe mit praxisrelevanten Qualitätskenngrößen herzustellen.

Diese Aufgaben werden gelöst durch die Bindemittelzusammensetzung nach Anspruch 1, den Holzwerkstoff nach einem der Ansprüche 4, 9, das Verfahren nach Anspruch 6 und die Verwendung nach einem der Ansprüche 11 und 12.

Die erfindungsgemäße Bindemittelzusammensetzung ist in Anspruch 1 definiert und enthält als Komponente i) Aminoplastharz, und als Komponente ii) zum einen Polyisocyanat ii.1) und zum anderen Ligninsulfonat ii.2). Die Teilkomponenten ii.2), d.h. das Ligninsulfonat, dient dazu, einen Teil des Polyisocyanats (Teilkomponente ii.1)) in den aus dem Stand der Technik bekannten polyisocyanathaltigen aminoplastbasierten Bindemittelzusammensetzungen zu ersetzen.

Die erfindungsgemäße Bindemittelzusammensetzung eignet sich besonders zur Herstellung und/oder Veredelung von Holzwerkstoffen und ist mit Blick auf den Stand der Technik besonders vorteilhaft. Die der Erfindung zugrunde liegende Forschung hat gezeigt, dass der kostspielige Polyisocyanatanteil einer aminoplastbasierten Bindemittelzusammensetzung durch eine Teilsubstitution mit Ligninsulfonat erniedrigt werden kann, ohne dass sich dies negativ auf die Prozessstabilität oder Vernetzungsgeschwindigkeit auswirkt.

Neben der reinen Substitutionswirkung weist die erfindungsgemäß vorgesehene Zugabe von Ligninsulfonat weitere Vorteile auf. Insbesondere wurde festgestellt, dass das Ligninsulfonat als Reaktivphasenvermittler und Emulgator wirkt. Dadurch wird das Aminoplastharz mit dem Polyisocyanat kompatibilisiert. Ligninsulfonat ist in der Lage, mit beiden Bindemittelkomponenten, d.h. sowohl mit dem Polyisocyanat als auch mit dem Aminoplastharz, zu reagieren und wirkt dadurch als Phasenvermittler an der Phasengrenzfläche zwischen den ansonsten nicht bis schlecht mischbaren Komponenten Polyisocyanat und Aminoplastharz. Ohne sich auf eine bestimmte Theorie festlegen zu wollen, trägt die reaktivphasenvermittelnde Funktion des Ligninsulfonats vermutlich dazu bei, dass die Menge an Polyisocyanat in der erfindungsgemäßen Bindemittelzusammensetzung reduziert werden kann. Durch die bessere Phasenverträglichkeit werden optimalere Reaktionsmöglichkeiten für das Polyisocyanat mit der Aminoplastphase geschaffen. Das Polyisocyanat wird in der erfindungsgemäßen Bindemittelzusammensetzung im Ergebnis effektiver genutzt. Somit kann trotz reduzierter Menge an Polyisocyanat weiterhin eine gleichbleibende Wirkung sowohl in Bezug auf die Prozessstabilität als auch die Beschleunigung und Verstärkung der Vernetzungsreaktion festgestellt werden.

Die erfindungsgemäße Bindemittelzusammensetzung erlaubt die Herstellung von Holzwerkstoffen mit hervorragenden Qualitätskenngrößen, insbesondere im Hinblick auf die Querzugfestigkeit, Quellung und Wasseraufnahme, wobei der fertige Holzwerkstoff ein Reaktionsprodukt der erfindungsgemäßen Bindemittelzusammensetzungen enthält.

Die erfindungsgemäßen Holzwerkstoffe sind insbesondere erhältlich nach dem hier beschriebenen erfindungsgemäßen Verfahren. Dieses ist aufgrund des Einsatzes der erfindungsgemäßen Bindemittelzusammensetzung besonders kostengünstig. Das erfindungsgemäße Verfahren ist jedoch auch besonders effektiv, da das mit der erfindungsgemäßen Bindemittelzusammensetzung beleimte lignocellulosehaltige Material während des Verfahrens weniger an Vorrichtungsbauteilen haften bleibt und damit die Prozessstabilität erhöht. Ferner ist das Verfahren unter Einsatz der erfindungsgemäßen Bindemittelzusammensetzung besonders effizient, da die Bindemittelzusammensetzung im Wesentlichen einphasig ist und als solche besonders praxisgerecht und sicher in einem einzigen Verfahrensschritt aufgetragen werden kann.

Die Erfindung betrifft ferner auch die Verwendung von Ligninsulfonat als Emulgator und Reaktivphasenvermittler und die Verwendung der erfindungsgemäßen Bindemittelzusammensetzung als Flächenleim zur Veredelung von Holzwerkstoffen.

Vorteilhafte Ausgestaltungen der Erfindung sind in den abhängigen Ansprüchen angegeben und werden nachfolgend zusammen mit der allgemeinen erfinderischen Idee im Einzelnen erläutert.

### DETAILLIERTE BESCHREIBUNG DER ERFINDUNG

Die erfindungsgemäße Bindemittelzusammensetzung zur Herstellung und/oder Veredelung von Holzwerkstoffen ist in Anspruch 1 definiert. Sie enthält die folgenden Bindemittelbestandteile:
i) 3 bis 15 Gew.-% Aminoplastharz, sowie
ii.1) 0,15 bis 1,5 Gew.-% Polyisocyanat und
ii.) 0,0003 bis 0,9 Gew.-% Ligninsulfonat,
wobei diese Gew.-% Angaben jeweils bezogen sind auf das Trockengewicht des lignocellulosehaltigen Materials, auf welches die Bindemittelzusammensetzung aufgebracht wurde.

Besonders gute Ergebnisse stellen sich ein, wenn die Bestandteile i), ii.1) und ii.2) in der Bindemittelzusammensetzung in den folgenden Mengen, jeweils als Feststoffgewicht bezogen auf das Gesamtfeststoffgewicht der Bindemittelzusammensetzung, enthalten sind:
i) das Aminoplastharz in einer Menge von 80 bis 97 Gew.-%, bevorzugt von 85 bis 95 Gew.-%, und insbesondere bevorzugt von 90 bis 95 Gew.-%;
ii.1) das Polyisocyanat in einer Menge von 2 bis 9 Gew.-%, bevorzugt von 3 bis 8 Gew.-%, und insbesondere bevorzugt von 4 bis 7,5 Gew.-%; und/oder
ii.2) das Ligninsulfonat in einer Menge von 0,005 bis 7 Gew.-%, bevorzugt von 0,01 bis 5 Gew.-%, und insbesondere bevorzugt von 0,02 bis 3 Gew.-%.

Die vorstehenden verschiedenen Mengenbereiche für Aminoplastharz unter i), für Polyisocyanat unter ii.1) und Ligninsulfonat unter ii.2) sind beliebig miteinander kombinierbar, solange die in Anspruch 1 angegebenen Mengenangaben erfüllt sind. Insbesondere sind die Mengenangaben auf der gleichen "Bevorzugungsebene" aufeinander abgestimmt. Die Bindemittelzusammensetzung kann, jeweils als Feststoffgewicht bezogen auf das Gesamtfeststoffgewicht der

Bindemittelzusammensetzung, folgende Mengen an den Bestandteilen i), ii.1) und ii.2) aufweisen:
i) Aminoplastharz in einer Menge von 85 bis 95 Gew.-%;
ii.1) Polyisocyanat in einer Menge von 3 bis 8 Gew.-%; und
ii.2) Ligninsulfonat in einer Menge von 0,005 bis 7 Gew.-%.

Wenn hier in der Beschreibung von Gew.-% im Zusammenhang mit der Bindemittelzusammensetzung die Rede ist, so sind, soweit nichts anderes angegeben ist, die Gew.-%-Angaben immer als Feststoffgewicht auf das Gesamtfeststoffgewicht der Bindemittelzusammensetzung bezogen, d.h. das Feststoffgewicht eines einzelnen Bestandteils ist bezogen auf das Gesamtfeststoffgewicht der Bindemittelzusammensetzung. Letzteres ergibt sich rechnerisch durch Subtraktion des Lösungsmittelanteils (zumeist Wasser) vom Gesamtgewicht der Bindemittelzusammensetzung. "Bezogen auf das Gesamtfeststoffgewicht der Bindemittelzusammensetzung" kann dabei insbesondere "bezogen auf das Gesamtgewicht (Feststoff) der in der Bindemittelzusammensetzung enthaltenen Bestandteile i) und ii)", d.h. nur auf die Summe der Feststoffmengen der Bestandteile i) und ii) bezogen, bedeuten.

Wenn hier oder nachfolgend numerische Werte angegeben sind, schließen diese Messungenauigkeiten ein und umfassen insbesondere Abweichungen von plus oder minus 2 %.

Die Anteile der Komponenten in der Bindemittelzusammensetzung (Feststoffanteile) können auch - wie in der Holzwerkstoffindustrie ebenfalls üblich und wie in Anspruch 1 angegeben - auf das Trockengewicht des lignocellulosehaltigen Materials bezogen werden, auf welches die Bindemittelzusammensetzung aufgebracht wird. Die Erfindung stellt eine Bindemittelzusammensetzung zum Aufbringen auf ein lignocellulosehaltiges Material bereit, welche folgende Feststoffgehälter bezogen auf das Trockengewicht des lignocellulosehaltigen Materials (z.B. im Fall von Holz, Feststoffgewicht Bindemittelkomponente bezogen auf Gewicht atro Holz), enthält:
i) 3 bis 15 Gew.-%, und insbesondere bevorzugt von 4 bis 12 Gew.-% Aminoplastharz;
ii.1) 0,15 bis 1,5 Gew.-%, und insbesondere bevorzugt von 0,3 bis 1 Gew.-% Polyisocyanat; und
ii.2) 0,0003 bis 0,9 Gew.-%, und insbesondere bevorzugt von 0,0009 bis 0,35 Gew.-% Ligninsulfonat.

Innerhalb der Komponente ii) hat die der Erfindung zugrundeliegende Forschung gezeigt, dass es durch den Einsatz von Ligninsulfonat möglich ist, bis zu 75 Gew.-% (Feststoffgewicht Ligninsulfonat bezogen auf das Feststoffgewicht Polyisocyanat) des üblicherweise bei Aminoplastharzen eingesetzten Polyisocyanats durch Ligninsulfonat zu ersetzen. Um diesen Substitutionscharakter des Ligninsulfonats zu verdeutlichen, kann der erfindungsgemäß erzielbare Anteil an Ligninsulfonat in der erfindungsgemäßen Bindemittelzusammensetzung auch auf das Feststoffgewicht des Polyisocyanats in der Bindemittelzusammensetzung bezogen werden. Vorzugsweise enthält die erfindungsgemäße Bindemittelzusammensetzung hiernach 0,1 bis 75 Gew.-%, bevorzugt 0,2 bis 60 Gew.-% und insbesondere bevorzugt 0,3 bis 35 Gew.-% Ligninsulfonat (Feststoffgewicht) bezogen auf das Feststoffgewicht Polyisocyanat.

Der Bestandteil i), d.h. das Aminoplastharz, ist typischerweise der Hauptbestandteil der Bindemittelzusammensetzung. Gemäß einer Ausführungsform macht das Aminoplastharz, jeweils als Feststoffgewicht bezogen auf das Gesamtfeststoffgewicht der Bindemittelzusammensetzung, mindestens 50 Gew.-%, bevorzugt mindestens 80 Gew.-%, weiter bevorzugt mindestens 90 Gew.-%, noch weiter bevorzugt mindestens 95 Gew.-% und insbesondere bevorzugt mindestens 99 Gew.-% der Bindemittelzusammensetzung aus.

Die Mengenverhältnisse der Bestandteile i) und ii) sind üblicherweise so gewählt, dass die Komponente i), d.h. das Aminoplastharz, im Überschuss vorliegt. Vorzugsweise sind die Bestandteile i) und ii) in der Bindemittelzusammensetzung in einem Gewichtsverhältnis (Feststoff zu Feststoff), von 5:1 bis 20:1, bevorzugt von 6:1 bis 15:1 enthalten.

Ferner sind die Bestandteile ii.1) und ii.2) in der Bindemittelzusammensetzung üblicherweise in einem Gewichtsverhältnis, bezogen jeweils auf Feststoff:Feststoff, von 200:1 bis 1:1, bevorzugt von 40:1 bis 1,2:1 enthalten.

In einer weiteren Ausführungsform sind der Bestandteil ii) der Bindemittelzusammensetzung (d.h. die Summe aus Polyisocyanat ii.1) und Ligninsulfonat ii.2)) in einer Menge von 4 bis 16 Gew.-%, bevorzugt von 4 bis 14 Gew.-%, und insbesondere bevorzugt von 4 bis 12 Gew.-%, jeweils als Feststoffgewicht bezogen auf das Gesamtfeststoffgewicht der Bindemittelzusammensetzung, enthalten.

### Aminoplastharz

Die erfindungsgemäße Bindemittelzusammensetzung enthält als Hauptbestandteil Aminoplastharz.

Wenn hier oder an anderer Stelle von Hauptbestandteil die Rede ist, so ist damit insbesondere gemeint, dass dieser Bestandteil den mengenmäßig größten Anteil in Gew.-% bezogen auf das Gesamtfeststoffgewicht der Bindemittelzusammensetzung ausmacht.

Besonders praxisgerechte Ergebnisse stellen sich ein, wenn die Bindemittelzusammensetzung, jeweils als Feststoffgewicht bezogen auf das Gesamtfeststoffgewicht der Bindemittelzusammensetzung, Aminoplastharz in einer Menge von 80 bis 97 Gew.-%, bevorzugt von 85 bis 95 Gew.-%, und besonders bevorzugt von 90 bis 95 Gew.-% enthält.

Ferner stellen sich besonders praxisgerechte Ergebnisse ein, wenn die Bindemittelzusammensetzung, jeweils bezogen auf das Trockengewicht des lignocellulosehaltigen Materials, Aminoplastharz in einer Menge von 1 bis 20 Gew.-%, bevorzugt von 3 bis 15 Gew.-%, und besonders bevorzugt von 4 bis 14 Gew.-% enthält.

Aminoplastharze sind Kondensationsharze. Diese härten durch Kondensationsreaktionen aus, bei denen oftmals Wasser abgespalten wird. Aminoplastharze sind dem Fachmann bekannt und z.B. in "Ullmanns Enzyklopädie der technischen Chemie", 4. Auflage, Band 7, S. 403ff. beschrieben. Aminoplastharze können durch Kondensation eines Amino-, Imino- oder Amidgruppen enthaltenden Bestandteils mit einer Carbonylverbindung erhalten werden. Häufige Ausgangsmaterialien für Aminoplastharze sind beispielsweise Harnstoff und/oder Melamin (als Aminogruppen enthaltender Bestandteil) und Formaldehyd (als Carbonylverbindung). Harze, die aus Harnstoff und Formaldehyd gebildet werden, bezeichnet man auch als Harnstoffformaldehydharz. Harze, die aus Melamin und Formaldehyd gebildet werden, bezeichnet man als Melaminformaldehydharz. In einer Ausführungsform ist das Aminoplastharz ausgewählt aus der Gruppe bestehend aus Harnstoff-Formaldehyd-Harz (UF), Melamin-Formaldehyd (MF), Melamin-Harnstoff-Formaldehyd-Harz (MUF), Melamin-Phenol-Formaldehyd (MPF), Melamin-Harnstoff-Phenol-Formaldehyd-Harz (MUPF) und Mischungen hiervon.

Wenn hier oder an anderer Stelle von Aminoplastharz die Rede ist, dann ist damit nicht nur das Kondensationsprodukt, also der eigentliche Aminoplast, gemeint, sondern primär auch die zugrundeliegenden Aminoplastharzzusammensetzungen, welche die Ausgangsstoffe zur Herstellung eines Aminoplasten, also mindestens einen Amino-, Imino- oder Amidgruppen enthaltenden Bestandteil und mindestens eine Carbonylverbindung, sowie ggf. Vorkondensate enthalten. Derartige Aminoplastharzzusammensetzungen enthalten typischerweise Wasser. So liegt das Aminoplastharz gemäß einer Ausführungsform in einer wässrigen Lösung oder Dispersion vor. Gemäß einer Ausführungsform ist das Aminoplastharz noch nicht ausgehärtet. Gemäß einer anderen Ausführungsform besitzt das Aminoplastharz die Fähigkeit zur Kondensation, d.h. es ist noch nicht oder zumindest noch nicht vollständig kondensiert. Das Aminoplastharz enthält hierbei Ausgangsstoffe für Aminoplastharze und ggf. aminoplastische Vorkondensate.

### Polyisocyanat

Die erfindungsgemäße Bindemittelzusammensetzung enthält als weiteren Pflichtbestandteil Polyisocyanat. Praxisgerechte Ergebnisse stellen sich ein, wenn die Bindemittelzusammensetzung, jeweils als Feststoffgewicht bezogen auf das Gesamtfeststoffgewicht der Bindemittelzusammensetzung, Polyisocyanat in einer Menge von 2 bis 9 Gew.-%, bevorzugt von 3 bis 8 Gew.-%, und besonders bevorzugt von 4 bis 7,5 Gew.-% enthält.

Ferner stellen sich besonders praxisgerechte Ergebnisse ein, wenn die Bindemittelzusammensetzung, jeweils bezogen auf das Trockengewicht des lignocellulosehaltigen Materials, Polyisocyanat in einer Menge von 0,1 bis 2 Gew.-%, bevorzugt von 0,15 bis 1,5 Gew.-%, und besonders bevorzugt von 0,3 bis 1 Gew.-% enthält.

Der Begriff "Polyisocyanat", wie hier verwendet, ist eine Sammelbezeichnung für Verbindungen, die im Molekül zwei oder mehrere Isocyanat-Gruppen (hierunter versteht der Fachmann freie Isocyanat-Gruppen der allgemeinen Struktur -N=C=O) enthalten. Einfachste und wichtigste Vertreter dieser Polyisocyanate sind die Diisocyanate. Diese haben die allgemeinen Struktur O=C=N-R-N=C=O, wobei R üblicherweise für aliphatische, alicyclische und/oder aromatische Reste steht. Vorzugsweise ist R ein aromatischer Rest oder umfasst R einen aromatischen Rest.

Polyisocyanate reagieren wegen der Mehrfachfunktionalität (≥ 2 Isocyanatgruppen) in Abhängigkeit von Reaktionsbedingungen und -partnern zu einer Vielzahl von Polymeren (z. B. Polyurethane, Polyharnstoffe und Polyisocyanurate) und niedermolekularen Verbindungen (z.B. solche mit Uretdion-, Isocyanurat-, Allophanat-, Biuret-, Iminooxadiazindion- und/oder Oxadiazintrionstruktur).

Wenn hier allgemein von "Polyisocyanaten" die Rede ist, so sind damit monomere und/oder oligomere Polyisocyanate gleichermaßen gemeint. Vorzugsweise ist das Polyisocyanat ein aromatisches Polyisocyanat. Besonders praxisgerechte Ergebnisse stellen sich ein, wenn das Polyisocyanat ausgewählt ist aus der Gruppe bestehend aus Diphenylmethandiisocyanat (MDI) und polymeren Diphenylmethandiisocyanat (PMDI). Besonders gute Ergebnisse lassen sich mit PMDI als Polyisocyanat erzielen.

Polymeres Diphenylmethandiisocyanat (PMDI) auch "technisches MDI" genannt, ist ein Stoffgemisch aus MDI (in Form seiner Isomere 4,4'-, 2,4'- und 2,2'-MDI) und homologen längerkettigen aromatischen Polyisocyanaten. Die Bezeichnung "polymeres Diphenylmethandiisocyanat" ist fachlich nicht ganz richtig, da es sich nicht um ein Polymer, sondern um ein Stoffgemisch aus Verbindungen mit mehreren (typischerweise bis 6) Phenylengruppen handelt, die je eine Isocyanatgruppe tragen. Häufige Handelsbezeichnung ist auch Polymethylenpolyphenylisocyanat.

PMDI wird seit mehr als 30 Jahren erfolgreich als Bindemittel in Holzwerkstoffplatten, insbesondere bei OSB-Platten eingesetzt und ist ein Ausgangsstoff zur Herstellung von Isocyanat- und Polyurethanbindemitteln (siehe z.B. Dunky, Niemz "Holzwerkstoffe und Leime", Springer Verlag 2002, Teil I, S. 385-394). Reines PMDI zeichnet sich vor allem durch ein sehr gutes Benetzungsverhalten von Holzoberflächen im Vergleich zu aminoplastbasierten wässrigen Bindemitteln aus. So sind bei PMDI bereits Beleimgrade von 3 bis 4 Gew.-% Feststoff bezogen auf atro Holz ausreichend, während aminoplastbasierte Bindemittel üblicherweise erst bei Beleimgraden von 8-10 Gew.-% Feststoff bezogen auf atro Holz zufriedenstellende Ergebnisse liefern.

Polyisocyanate zeichnen sich durch ihre hohe Reaktivität gegenüber allen Verbindungen aus, die aktiven Wasserstoff enthalten. Eine wesentliche Härtungsreaktion verläuft mit Wasser zur Amidbildung unter gleichzeitiger Abspaltung von CO₂. Das Amid kann mit weiteren Isocyanatgruppen u.a. zu Polyharnstoffstrukturen weiterreagieren (Eigenvernetzung der Polyisocyanate). Polyisocyanate reagieren jedoch auch mit freien OH- oder NH₂-Gruppen von beispielsweise Aminoplastharzen und können somit in diese einpolymerisieren.

### Ligninsulfonat

Die erfindungsgemäße Bindemittelzusammensetzung enthält Ligninsulfonat. Praxisgerechte Ergebnisse stellen sich ein, wenn die Bindemittelzusammensetzung, jeweils als Feststoffgewicht bezogen auf das Gesamtfeststoffgewicht der Bindemittelzusammensetzung, Ligninsulfonat in einer Menge von 0,005 bis 7 Gew.-%, bevorzugt von 0,01 bis 5 Gew.-%, und besonders bevorzugt von 0,02 bis 3 Gew.-% enthält.

Zweckmäßig ist insbesondere, wenn der Bestandteil Ligninsulfonat der Bindemittelzusammensetzung bezogen auf den Feststoffanteil des Polyisocyanats in der Bindemittelzusammensetzung (Feststoffgewicht Ligninsulfonat bezogen auf Feststoffgewicht Polyisocyanat) in einer Menge von 0,1 bis 75 Gew.-%, bevorzugt von 0,2 bis 60 Gew.-% und insbesondere bevorzugt von 0,3 bis 35 Gew.-% enthalten ist.

Besonders praxisgerecht ist insbesondere, wenn die Bestandteile ii) der Bindemittelzusammensetzung, d.h. die Bestandteile ii.1) Polyisocyanat und ii.2) Ligninsulfonat, in einer Menge von 2 bis 16 Gew.-% bevorzugt von 3 bis 14 Gew.-%, und insbesondere bevorzugt von 4 bis 12 Gew.-%, jeweils als Feststoffgewicht bezogen auf das Gesamtfeststoffgewicht der Bindemittelzusammensetzung enthalten sind.

Die Erfindung beruht auf der überraschenden Erkenntnis, dass Ligninsulfonat ein hervorragender Emulgator und Reaktivphasenvermittler zwischen Polyisocyanaten wie PMDI und Aminoplastharzen wie Harnstoff-Formaldehyd-Harz ist. Das Ligninsulfonat wird hierin daher auch als erfindungsgemäßer Emulgator oder Reaktivphasenvermittler bezeichnet. Die Erfindung betrifft in diesem Sinne auch die Verwendung von Ligninsulfonat als Emulgator und Reaktivphasenvermittler zwischen einem Polyisocyanat und einem Aminoplastharz. Diese Verwendung betrifft insbesondere die Verwendung von Ligninsulfonat in einer Bindemittelzusammensetzung zu diesem Zweck, vorzugsweise in einer Bindemittelzusammensetzung, die zur Herstellung oder Veredelung von Holzwerkstoffen geeignet ist.

Gemäß einer Ausführungsform umfasst die Bindemittelzusammensetzung mindestens zwei Phasen, eine Phase, welche das Aminoplastharz enthält (hier Aminoplastphase genannt), und eine andere Phase, welche das Polyisocyanat enthält (hier Polyisocyanatphase genannt). Die beiden Phasen sind ohne Zugabe eines Emulgators und Phasenvermittlers wie Ligninsulfonat nicht oder schlecht miteinander mischbar. Typischerweise ist die Aminoplastphase eine hydrophile, insbesondere wässrige, Phase und die Polyisocyanatphase eine hydrophobe Phase. Das Ligninsulfonat wirkt in der erfindungsgemäßen Bindemittelzusammensetzung als Emulgator und Reaktivphasenvermittler. D.h. die Bindemittelzusammensetzung liegt vorzugsweise als Dispersion vor.

Ein "Emulgator" im Sinne der Erfindung bewirkt, dass mindestens zwei nicht oder schlecht miteinander mischbare Phasen zu einem feinverteilten Gemisch (einer Dispersion) vermengt und stabilisiert werden. Das erfindungsgemäß eingesetzte Ligninsulfonat emulgiert dabei die ölige, hydrophobe Polyisocyanatphase mit der hydrophilen Phase, die das Aminoplastharz enthält und üblicherweise eine wässrige Phase ist.

Das erfindungsgemäß eingesetzte Ligninsulfonat wirkt in der Bindemittelzusammensetzung nicht nur als Emulgator, sondern auch als Reaktivphasenvermittler. Wenn hier von "Reaktivphasenvermittler" die Rede ist, dann ist damit ein Phasenvermittler gemeint, der durch kovalente Reaktionen an der Phasengrenzfläche für eine Kopplung und Kompatibilisierung, und damit einhergehend für eine bessere Phasendurchmischung, von mindestens zwei ursprünglich schlecht oder nicht miteinander mischbaren Phasen sorgt. Der Vorteil der Reaktivphasenvermittlung liegt erfindungsgemäß darin, dass aufgrund der Durchmischung der Polyisocyanatphase und der aminoplastharzenthaltenden Phase optimale Reaktionsmöglichkeiten zwischen den in den beiden Phasen vorhandenen Reaktionspartnern entstehen, da eine Erhöhung der Phasengrenzfläche, und damit Reaktionsoberfläche, stattgefunden hat.

Ohne an eine bestimmte wissenschaftliche Theorie gebunden sein zu wollen, scheint das Ligninsulfonat zumindest teilweise über freie OH-Gruppen mit den anderen Bestandteilen der Bindemittelzusammensetzung, insbesondere dem Polyisocyanat und dem Aminoplastharz, zu reagieren. Derart mit Ligninsulfonat modifizierte Polyisocyanate sind besser mit der aminoplastharzenthaltenden hydrophilen Phase mischbar und umgekehrt. Die aminoplastharzenthaltende Phase kann dabei die Bestandteile Formaldehyd, Harnstoff, Melamin, Phenol und/oder Vorkondensate dieser Verbindungen enthalten. Jedenfalls führt die Anwesenheit des Ligninsulfonats in der erfindungsgemäßen Bindemittelzusammensetzung zu einer erhöhten Mischbarkeit bzw. Emulgierung der Mischung aus Polyisocyanat und Aminoplastharz. Dies geht bis hin zur - zumindest augenscheinlichen - Einphasigkeit. Die Wirkung setzt bereits bei einer Menge von 0,005 Gew.-% Ligninsulfonat (Feststoffgewicht bezogen auf das Gesamtfeststoffgewicht der Bindemittelzusammensetzung) ein.

Die der Erfindung zugrundeliegenden Forschungsergebnisse zeigen ferner, dass durch den Einsatz von Ligninsulfonat die Menge an PMDI regelmäßig um bis zu ca. einem Drittel und abhängig vom Holzwerkstoff um bis zu 75%) reduziert werden kann, ohne dass es zu einer Verschlechterung der mechanischen Eigenschaften kommt. Darüber hinausgehende Ligninsulfonatanteile sind zwar möglich, führen aber in der Regel nicht zu praxisgerechten Ergebnissen.

Der Stand der Technik schlägt zwar vor, Ligninsulfonat bei bestimmten Herstellungsverfahren für Holzwerkstoffe als Bindemittelbestandteil einzusetzen. Allerdings waren die Ergebnisse bislang wenig ermutigend. Der Einsatz von Ligninsulfonat hat sich in der Praxis nicht durchgesetzt. Außerdem wurde die Zugabe von Ligninsulfonat bislang hauptsächlich für die mit den phenolischen Strukturen im Lignin strukturverwandten Harztypen PMDI und Phenolharze in Erwägung gezogen. Eine Zugabe von Ligninsulfonat zu den strukturell mit Ligninsulfonat nicht verwandten Aminoplastharzen oder gar polyisocyanathaltigen Aminoplastharzen ist aus dem Stand der Technik nicht bekannt.

So schlägt die US 4,279,788 beispielsweise Bindemittel für Holzwerkstoffe vor, die Polyisocyanat in einer Menge von 20-95 Gew.-%, bevorzugt 50-80 Gew.-% und ligninhaltige Calcium-, Ammonium- oder Natriumsulfitablauge in einer Menge von 5-80 Gew.-%, bevorzugt 20-50 Gew.-%, enthalten. In Beispiel 28 der US 4,279,788 wird Calciumsulfitablauge mit einer Präpolymeremulsion vermischt, die MDI, 50 % Polyvinylalkohol und 5 % cellulosischen Füllstoff enthält. Die daraus resultierende Bindemittelzusammensetzung weist einen Feststoffgehalt an Lignin von 25 % auf. Das Problem der Reduktion von Polyisocyanaten in aminoplastbasierten Bindemittelzusammensetzungen wird nicht angesprochen.

Die US 6,524,652 B2 betrifft lagerstabile isocyanatbasierte Bindemittel für Holzwerkstoffe, wobei das isocyanatbasierte Bindemittel mindestens einen Aminkatalysator beinhaltet. Diese Bindemittel können gemäß der US 6,524,652 B2 mit diversen zusätzlichen Bindemittelbestandteilen gemischt werden. Als zusätzliche Bindemittelbestandteile werden unter anderem ligninsulfonatenthaltende Sulfitablauge genannt (siehe Sp. 4, Z. 19-34). Das Mischungsverhältnis von isocyanatbasiertem Bindemittel zu den erwähnten zusätzlichem Bindemittelbestandteilen kann in weiten Bereichen variieren: von 1:10 bis 10:1 oder bevorzugt 1:5 bis 5:1. Die US 6,524,652 B2 listet Ligninsulfonat lediglich als mögliches zusätzliches Bindemittel in einer langen Liste auf. Die zusätzlichen Bindemittelbestandteile können auch in Mischungen eingesetzt werden. Zusammenfassend beschreibt die US 6,524,652 B2 Bindemittelsysteme auf Basis von Polyisocyanat und Aminkatalysatoren mit möglichen zusätzlichen Bindemittelbestandteilen. Das Problem der Reduktion von Polyisocyanaten in aminoplastbasierten Bindemittelzusammensetzungen wird nicht angesprochen.

Die DE 36 44 397 C1 betrifft Bindemittel für Holzwerkstoffe, bei deren Herstellung ligninartige Abfallstoffe aus der Zellstoffherstellung (z.B. Sulfitablaugen) mit phenoloxidierenden Enzymen umgesetzt und mit einem Kunstharz als zusätzlicher Bindemittelbestandteil gemischt werden. Hauptbindemittelbestandteil ist eine Mischung aus Enzymkonzentrat- und Ca-Sulfitablauge. Das hinzuzufügende Kunstharz kann ausgewählt sein aus Isocyanat-, Harnstoff-Formaldehyd- oder Melamin-Formaldehyd-Harz. Es soll in der Bindemittelzusammensetzung in einer Menge von lediglich etwa 1-15 Gew.-%, bevorzugt 3-8 Gew.-%, bezogen auf den Gesamtfeststoffgehalt der Bindemittelzusammensetzung eingesetzt werden. In Beispiel 2 von DE 36 44 397 C1, wird PMDI als Kunstharz einsetzt, jedoch lediglich in sehr geringen Mengen (4,5 Gew.-% der Bindemittelzusammensetzung). Weit über 90 Gew.-% der Bindemittelzusammensetzung bestehen aus Enzymkonzentrat und Ca-Sulfitablauge. Die Zugabe phenoloxidierender Enzyme aktiviert und kondensiert die Ligninsulfonate. In dem enzymatisch katalysierten Vorgang entstehen mesomere freie Radikale, die untereinander zu einem hochmolekularen, amorphen Dehydrierungspolymerisat polymerisieren. Gemäß DE 36 44 397 C1 soll eine alleinige Verwendung von Sulfitablauge und Isocyanat, d.h. ohne Enzymbeimischung, nicht zu zufriedenstellenden Platteneigenschaften führen. Damit hergestellte Platten sollen eine starke Quellung aufweisen. Folglich beschreibt die DE 36 44 397 C1 ein auf Enzymkonzentrat- und Ca-Sulfitablauge-basierendes Bindemittelsystem, welches als zusätzliche Bindemittelbestandteile Isocyanat oder Aminoplastharz enthält. Das Problem der Reduktion von Polyisocyanaten in Bindemittelzusammensetzungen, die Aminoplastharz und Polyisocyanat enthalten, geschweige denn aminoplastbasiert sind, d.h. Aminoplastharze als Hauptbestandteil enthalten, wird jedoch nicht angesprochen.

Im Gegensatz zum Stand der Technik der DE 36 44 397 C1 erlaubt die spezielle Bindemittelzusammensetzung der Erfindung den Einsatz von Ligninsulfonat ohne Zugabe von phenoloxidierenden Enzymen. In einer Ausführungsform der Erfindung weist die Bindemittelzusammensetzung keine Enzyme auf. In einer weiteren Ausführungsform weist die Bindemittelzusammensetzung keine phenoloxidierenden Enzyme auf.

Es war vor diesem Hintergrund überraschend, dass Ligninsulfonat in den erfindungsgemäßen Bindemittelzusammensetzungen zumindest teilweise die spezielle Funktion von Polyisocyanaten in aminoplastbasierten Bindemitteln übernehmen kann, nämlich ebenso wie Polyisocyanate zu einer beschleunigten Aushärtung und höheren Prozessstabilität führt.

Die der Erfindung zugrundeliegende Forschung hat gezeigt, dass Ligninsulfonat exzellente emulgierende Eigenschaften für Polyisocyanate wie PMDI besitzt. In Mischungen mit polaren Substanzen wie Wasser, wässrigen Dispersionen und/oder Aminoplastharzen erhöht dies die Oberfläche zwischen den Reaktionspartnern. Dies führt erfindungsgemäß zu einer höheren Reaktivität und damit verbundenen, kürzeren Presszeiten.

Gemäß einer Ausführungsform liegt die Bindemittelzusammensetzung als fein dispergierte Dispersion vor. Das Ligninsulfonat fungiert erfindungsgemäß als Emulgator und Reaktivphasenvermittler zwischen dem Aminoplastharz, welches typischer Weise in Form einer wässrigen Dispersion vorliegt, und dem hydrophoben Polyisocyanat. Gemäß einer weiteren Ausführungsform liegt die Bindemittelzusammensetzung im Wesentlichen als einphasige Zusammensetzung vor. Im Wesentlich einphasig bedeutet dabei, dass mit dem bloßen Auge keine Phasentrennung feststellbar ist. In der Praxis kann es sich dabei nichtsdestotrotz um mikroskopisch fein dispergierte Dispersion handeln.

Die Reaktivität von Polyisocyanaten mit Wasser oder wässrigen bzw. hydrophilen Reaktionspartnern wird maßgeblich durch die Phasengrenzfläche und Temperatur beeinflusst. Polyisocyanate haben üblicherweise ein Molekulargewicht von 200-10000 g/mol. Sie sind ölige, stark hydrophobe Flüssigkeiten, die sich sehr schlecht mit Wasser und Aminoplasten mischen. Bei Raumtemperatur tritt eine Reaktion lediglich sehr langsam und nur an der Grenzfläche zwischen der hydrophoben Polyisocyanatphase und der wässrigen/hydrophilen Aminoplastphase auf. Die erfindungsgemäße Wirkweise des Ligninsulfonats als Reaktivphasenvermittler und Emulgator für das Polyisocyanat führt zu einer Dispergierung der Polyisocyanatphase und damit einer starken Erhöhung der Phasengrenzfläche bis hin zum Idealfall der Einphasigkeit bzw. fein dispergierten Dispersion.

Die erfindungsgemäß erzielbare höhere Reaktivität der Bindemittelzusammensetzung durch den Einsatz von Ligninsulfonat als Emulgator und Reaktivphasenvermittler kann zur Reduktion der Menge an PMDI genutzt werden oder auch bei gleichbleibender PMDI-Menge zur Reduktion der Presszeiten und/oder der Presstemperaturen genutzt werden.

Die Zumischung von Ligninsulfonat überführt die ansonsten nicht gut mischbare Bindemittelzusammensetzung aus Polyisocyanat und Aminoplastharz in eine im Wesentlichen einphasige Zusammensetzung bzw. mikroskopisch fein dispergierte Dispersion. Dispersionen bzw. disperse Systeme sind dem Fachmann grundsätzlich bekannt (vgl. "Pharmazeutische Technologie", Voigt, Deutscher Apotheker Verlag Stuttgart, 2000, S. 81 ff). "Dispersion" bezeichnet ein System aus mindestens zwei Phasen, von denen mindestens eine Phase eine kontinuierliche Phase, ein sogenanntes Dispersionsmittel, und mindestens eine weitere darin verteilte Phase, eine sogenannte disperse oder dispergierte Phase oder Dispergens, ist (vgl. auch DIN EN ISO 862:1995-10). Die kontinuierliche Phase kann flüssig, fest oder in einer Mischung daraus (d.h. flüssig-fest) vorliegen. Alternativ ist die Aminoplastphase die kontinuierliche Phase, in welcher die Polyisocyanatphase dispergiert vorliegt. Die Aminoplastphase ist vorzugsweise flüssig-fest oder fest. Wenn hier oder anderer Stelle von "flüssig" die Rede ist, dann sind damit bei Raumtemperatur (25 °C) und Normaldruck (1 atm) flüssige Stoffe gemeint. Wenn nicht anders angegeben, sind alle hier genannten Werte bei Normaldruck (1 atm) gemessen. Die disperse Phase kann ebenfalls flüssig, fest oder in einer Mischung daraus (d.h. flüssig-fest) vorliegen. Vorzugsweise ist die disperse Phase die Polyisocyanatphase und flüssig oder flüssig-fest. Üblicherweise handelt es sich bei der erfindungsgemäßen Bindemittelzusammensetzung um eine fein dispergierte Dispersion.

Die disperse Phase liegt dabei üblicherweise fein dispergiert in der kontinuierlichen Phase vor. Wenn hier von "fein dispergiert" die Rede ist, dann ist damit eine kolloidal disperse Verteilung (Partikeldurchmesser der dispersen Phase durchschnittlich 1 nm bis 1 µm) und/oder eine grob disperse Verteilung (Partikeldurchmesser der dispersen Phase durchschnittlich größer als 1 µm) der Partikel der dispersen Phase gemeint. Dem Fachmann sind verschiedene Definitionen von "Partikeldurchmesser" und Verfahren zur Bestimmung des Partikeldurchmessers bekannt (vgl. "Pharmazeutische Technologie", Voigt, Deutscher Apotheker Verlag Stuttgart, 2000, S. 29 ff). Wenn hier von "Partikeldurchmesser" die Rede ist, dann wird hierunter der durchschnittliche Durchmesser des flächengleichen Kreises verstanden.

Der erfindungsgemäße Einsatz von Ligninsulfonat als Teilsubstitut von PMDI ist auch deswegen besonders vorteilhaft, weil damit ein erdölbasierter Rohstoff (PMDI) durch einen aus nachwachsenden Rohstoffen gewonnenen und als Abfallprodukt anfallenden Rohstoff (Ligninsulfonat) zumindest teilweise ersetzt wird. Ligninsulfonat fällt in großen Mengen als wässriges Abfallprodukt bei der Zellstoffherstellung nach dem Sulfitverfahren an. Deshalb besteht grundsätzlich ein großes Interesse an Verwertungsmöglichkeiten.

Das Sulfitverfahren ist ein großtechnisch angewandter chemisch-industrieller Prozess zur Gewinnung von Cellulose aus Holz. Beim Sulfitverfahren kann, je nach verwendetem Kation (Calcium, Magnesium, Natrium, Ammonium), das Holz im sauren oder auch neutralen Milieu aufgeschlossen werden (Holzaufschluss). Im Prozess wird das Lignin unter Molekülverkleinerung einer Sulfonierung unterworfen und wird dabei in ein wasserlösliches Salz der Ligninsulfonsäure überführt, welches leicht aus der Faser entfernt werden kann. Wasserlösliche Salze der Ligninsulfonsäure werden als Ligninsulfonat bezeichnet. Je nach pH-Wert werden die im Holz vorhandenen Hemicellulosen entweder durch saure Hydrolyse in Zucker umgewandelt und gehen in die wässrige Phase über oder sie verbleiben mit der Cellulose in der Faser. Die so hergestellten Zellstoffe werden zur Papierherstellung verwendet. Rund 15 % des in Deutschland verbrauchten Zellstoffs werden im Sulfitverfahren gewonnen. Ligninsulfonat fällt in großen Mengen als Nebenprodukt an, welches bei fehlender Verwendungsmöglichkeit verbrannt werden muss.

Im Stand der Technik wurde bereits zahlreich vorgeschlagen, Lignin und Ligninsulfonat als Bindemittel bzw. Bindemittelbestandteil zu verwenden. Nachteilig ist jedoch die auch im Stand der Technik bemängelte niedrige Reaktivität aufgrund der niedrigen Anzahl an reaktiven Stellen im Molekül. Es existiert zwar ein ausgeprägtes Schrifttum zu Einsatzmöglichkeiten von Lignin und Ligninsulfonat, tatsächlich realisierbare und in der Praxis realisierte Einsatzmöglichkeiten für Ligninsulfonat in der Holzwerkstoffindustrie sind jedoch überraschend selten (siehe z.B. Dunky, Niemz "Holzwerkstoffe und Leime", Springer Verlag 2002, Teil I, S. 412-414). Meistens ist eine oxidative Aktivierung des phenolischen Rings im Ligninmolekül (chemisch oder enzymatisch) wie weiter oben am Beispiel der DE 36 44 397 C1 erläutert erforderlich.

Chemisch gesehen ist Ligninsulfonat ein wasserlösliches Polyphenol. Ligninsulfonat kann als Salz in Form von Calcium-, Magnesium-, Ammonium- und/oder NatriumLigninsulfonat vorliegen. Ligninsulfonate haben eine sehr breite Molmassenverteilung von 1000 bis 140000 g/mol. Die mittlere molare Masse des Ligninsulfonats ist abhängig von dem zur Herstellung eingesetzten Holz (Nadelholz, Laubholz) und vom Herstellungsprozess selbst. Die Ligninsulfonate sind leicht löslich in Wasser. Auch mit hohem Molekulargewicht sind sie wasserlöslich. Daher befindet sich das Ligninsulfonat in der erfindungsgemäßen Bindemittelzusammensetzung typischerweise in der Aminoplastphase.

Lignin wird im Sulfitverfahren durch Sulfonierung in wasserlösliches Ligninsulfonat überführt. Über die zahlreichen noch vorhandenen freien OH-Gruppen kann es mit Polyisocyanat reagieren und dieses über die ebenfalls vorhandenen Sulfonatgruppen in Bezug auf wässrige oder polare Phasen kompatibilisieren. Dies erklärt vermutlich die erfindungsgemäß festgestellten hervorragenden emulgierenden Eigenschaften von Ligninsulfonat auf Polyisocyanate wie PMDI. Diese werden besonders in Kombination mit den eingesetzten Aminoplastharz deutlich.

Im vorstehend erläuterten Stand der Technik wurde der Einsatz von Ligninsulfonat bislang nur vereinzelt in Kombination mit PMDI-Harzen beschrieben. Hier ging es jedoch nicht um Aminoplastharz-PMDI Mischsysteme und schon gar nicht um das der Erfindung zugrundeliegende Problem, nämlich um die Reduktion des Einsatzes von PMDI in aminoplastbasierten Bindemitteln, wobei gleichzeitig die durch PMDIvermittelte Prozessstabilität bei der Produktion eines derartige beleimten Holzwerkstoffs bewahrt werden soll sowie die Wirkung von PMDI als Beschleuniger und Verstärker von aminoplastbasierten Bindemitteln.

Die Erfinder haben herausgefunden, dass es durch die Anwesenheit aller im Anspruch 1 genannten Bestandteile möglich ist, Holzwerkstoffe mit hervorragenden mechanischen Eigenschaften herzustellen, selbst wenn ein Teil des eingesetzten Polyisocyanats (z.B. PMDI) durch Ligninsulfonat ersetzt wird.

Das Ligninsulfonat kann in Form der kommerziell erhältlichen wässrigen Ligninsulfonatzusammensetzungen eingesetzt werden. Diese enthalten meist aufgrund ihrer Entstehung im Sulfitprozess einen Feststoffanteil Ligninsulfonat von etwa 10 bis 12 Gew.-% in wässriger Lösung. In der offenbarten Bindemittelzusammensetzung können jedoch auch verdünntere oder konzentriertere Ligninsulfonatzubereitungen oder Ligninsulfonat als Feststoff eingesetzt werden. Bevorzugt wird das Ligninsulfonat in Form einer wässrigen Zusammensetzung, insbesondere einer wässrigen Suspension eingesetzt. Dies hat zum einen den Vorteil, dass das Ligninsulfonat direkt so eingesetzt werden kann, wie es im Sulfitprozess anfällt. Bevorzugt wird das Ligninsulfonat in Form einer wässrigen Zusammensetzung eingesetzt, die Ligninsulfonat in einer Menge von 1 bis 57 Gew.-%, noch bevorzugter 5 bis 20 Gew.-% bzw. 8 bis 15 Gew.-%, jeweils bezogen auf das Gesamtgewicht der Ligninsulfonatzusammensetzung, enthält.

Der pH-Wert des eingesetzten Ligninsulfonats kann in weiten Bereichen variieren, je nach Art des Sulfitverfahrens, aus dem es stammt. So ist ein pH-Wert von 1 bis 13 möglich. Die Bindemittelzusammensetzung kann einen pH-Wert von 4 bis 8, bevorzugt von 5 bis 7 aufweisen.

In einer Ausführungsform handelt es sich bei dem Ligninsulfonat um Calcium-Ligninsulfonat. In einer anderen Ausführungsform handelt es sich bei dem Ligninsulfonat um Magnesium-Ligninsulfonat. In einer weiteren Ausführungsform handelt es sich bei dem Ligninsulfonat um Ammonium-Ligninsulfonat. Es können auch Mischungen dieser drei Ligninsulfonat-Typen eingesetzt werden.

### Weitere Bestandteile

Die erfindungsgemäße Bindemittelzusammensetzung kann zusätzliche Bestandteile enthalten, d.h. die erfindungsgemäße Bindemittelzusammensetzung kann neben den Bestandteilen i) Aminoplastharz, ii.1) Polyisocyanat und ii.2) Ligninsulfonat weitere Bestandteile enthalten.

Ein üblicherweise vorhandener weiterer Bestandteil der erfindungsgemäßen Bindemittelzusammensetzung ist ein Lösungsmittel, insbesondere Wasser. Dieses ist typischerweise in Mengen von mindestens 5 Gew.-%, bevorzugt mindestens 10 Gew.-%, bezogen auf das Gesamtgewicht der Bindemittelzusammensetzung enthalten. Praxisgerechte Ergebnisse stellen sich ein, wenn die Bindemittelzusammensetzung 10 bis 45 Gew.-% Wasser, bezogen auf das Gesamtgewicht der Bindemittelzusammensetzung, enthält.

Die erfindungsgemäße Bindemittelzusammensetzung enthält in einer Ausführungsform einen Härter für das Aminoplastharz. Im erfindungsgemäßen Verfahren kann der Härter der Bindemittelzusammensetzung vor oder während des Beleimens zugesetzt werden. Dies kann insbesondere dadurch erfolgen, dass der erfindungsgemäßen Bindemittelzusammensetzung vor dem Auftragen auf das lignocellulosehaltige Material ein Härter zugesetzt wird. Es ist jedoch auch möglich, während des Beleimens der Holzpartikel die erfindungsgemäße Bindemittelzusammensetzung und einen Härter getrennt voneinander, gegebenenfalls mit weiteren Additiven, auf die Holzpartikel aufzutragen.

Als Härter kommen konventionelle Härter, wie sie dem Fachmann aus dem Gebiet der Aminoplastharze bekannt sind, in Betracht. Beispiele für konventionelle Härter sind starke organische Säuren, anorganische Säuren, wie Schwefelsäure und Phosphorsäure, Salze, die in Wasser sauer reagieren, wie Aluminiumchlorid und Aluminiumnitrat (auch als saure Salze bezeichnet), Salze, die durch Reaktion mit Bestandteilen des Aminoplastharzes, vorzugsweise mit Formaldehyd, eine Säure generieren (auch als Säure generierende Salze bezeichnet) wie Ammoniumphosphat, Ammoniumnitrat, Ammoniumsulfat und Ammoniumchlorid, und Mischungen der vorgenannten Substanzen.

Es ist jedoch auch möglich, dass die Bindemittelzusammensetzung weitere Stoffe enthält. Beispielsweise können Netz- und/oder Trennmittel für einen verbesserten Pressvorgang zugesetzt werden. Weiterhin können Pilzschutzmittel, Hydrophobiermittel, Farbstoffe, Feuerschutzmittel und/oder Füllstoffe zugesetzt werden.

Des Weiteren ist es möglich, dass die Bindemittelzusammensetzung Formaldehydfänger enthält. Ein Formaldehydfänger bindet freies bzw. ungebundenes Formaldehyd chemisch ab. Solche als "Formaldehydfänger" bezeichneten Stoffe sind Substanzen mit freien Aminogruppen, wie beispielsweise Melamin oder Harnstoff. Der Formaldehydfänger kann jedoch auch aus zwei oder mehreren Bestandteilen bestehen, die gemeinsam die Bindung des Formaldehyds bewirken.

### Verfahren

Die Erfindung stellt ein Verfahren zur Herstellung eines Holzwerkstoffs gemäß Anspruch 6 bereit.

Im Hinblick auf die im erfindungsgemäßen Verfahren eingesetzten Bestandteile Aminoplastharz, Polyisocyanat und Ligninsulfonat, sowie möglichen weiteren Bestandteilen der Bindemittelzusammensetzung, gilt das bereits zu diesen Bestandteilen im Zusammenhang mit der erfindungsgemäßen Bindemittelzusammensetzung Gesagte entsprechend.

Das Verfahren wird typischerweise in alphabetischer Reihenfolge der obengenannten Schritte durchgeführt. Es können jedoch vor, gleichzeitig und nach sowie zwischen den genannten Schritten noch weitere Verfahrensschritte durchgeführt werden. Zum Beispiel kann zwischen den Schritten A. und B.1/B.2 ein Trocknungsschritt vorgesehen sein und/oder es können in Schritt B.2 noch weitere Bestandteile wie ein Härter aufgebracht werden.

Schritt A. des erfindungsgemäßen Verfahrens besteht in der Bereitstellung von lignocellulosehaltigem Material. Wenn hier von "lignocellulosehaltigem Material" die Rede ist, ist damit pflanzliches Material gemeint, das Lignocellulose enthält. Lignocellulose im Sinne der Erfindung enthält Cellulose und/oder Hemicellulose sowie Lignin. Vorzugsweise handelt es sich bei dem lignocellulosehaltigen Material um holzenthaltendes Material oder Holz.

"Cellulose" ist ein unverzweigtes Polysaccharid, das aus mehreren hundert bis zehntausend Cellobiose-Einheiten besteht. Diese Cellobiose-Einheiten bestehen wiederum aus zwei Molekülen Glucose, die über eine β-1,4-glykosidische Bindung verknüpft sind.

"Hemicellulose" ist eine Sammelbezeichnung für verschiedene Bestandteile pflanzlicher Zellwände. Bei den Hemicellulosen handelt es sich um verzweigte Polysaccharide mit einer geringeren Kettenlänge - üblicherweise weniger als 500 Zuckereinheiten - welche aus verschiedenen Zuckermonomeren aufgebaut sind. Hemicellulose ist im Wesentlichen aus verschiedenen Zuckermonomeren, wie beispielsweise Glucose, Xylose, Arabinose, Galactose und Mannose, aufgebaut, wobei die Zucker Acetyl- sowie Methylsubstituierte Gruppen aufweisen können. Sie besitzen eine zufällige, amorphe Struktur und sind gut hydrolysierbar. Xylose bzw. Arabinose besteht aus Zuckermonomeren mit fünf Kohlenstoffatomen (Pentosen). Mannose bzw. Galactose besteht hauptsächlich aus Zuckermonomeren mit sechs Kohlenstoffatomen (Hexosen).

"Lignine" sind amorphe, unregelmäßig verzweigte aromatische Makromoleküle, welche in der Natur als Bestandteil von Zellwänden vorkommen und dort die Verholzung (Lignifizierung) der Zelle bewirken. Sie sind aus substituierten Phenylpropanol-Einheiten aufgebaut, zeigen einen lipophilen Charakter und sind bei Zimmertemperatur in neutralen Lösemitteln, wie beispielsweise Wasser, unlöslich. Vorläufersubstanzen von Lignin sind beispielsweise p-Coumaryl-Alkohol, Coniferyl-Alkohol und Sinapyl-Alkohol. Die Molmassen von Lignin liegen üblicherweise zwischen 10000 und 20000 g/mol.

Das lignocellulosehaltige Material besteht vorzugsweise aus Holz oder ist ein holzenthaltendes Material. Das lignocellulosehaltige Material kann ausgewählt sein aus der Gruppe bestehend aus Holzmehl, Holzfasern, Holzspänen, Holzstrands und Hackschnitzeln. Gemäß einer bevorzugten Ausführungsform wird das lignocellulosehaltige Material in Form von Holzpartikeln bereitgestellt, d. h. es kann Holzpartikel enthalten oder daraus bestehen. Holzpartikel, wie hier verwendet, können Holz enthalten oder aus Holz bestehen. Beispiele für Holzpartikel sind feinteiliges Holzmaterial, Holzspäne, Holzstrands, Holzfasern, Holzwafer, Holzflakes und Hackschnitzel. Üblicherweise werden die Holzpartikel für Holzwerkstoffe durch schneidende Verfahren gewonnen, jene für Holzfaserstoffe durch Zerfaserung. In einem optionalen Schritt können die Holzpartikel vor oder nach dem Einsatz in Schritt A. des erfindungsgemäßen Verfahrens getrocknet oder zwischengelagert werden.

Schritt B. des erfindungsgemäßen Verfahrens besteht in dem Aufbringen einer erfindungsgemäßen Bindemittelzusammensetzung.

Die Bindemittelzusammensetzung kann in Form einer vorgemischten Bindemittelzusammensetzung vorliegen oder erst nach Einzelapplikation der Bestandteile der Bindemittelzusammensetzung entstehen. Demnach können das Aminoplastharz i), das Polyisocyanat ii.1) und das Ligninsulfonat ii.2) oder Einzelmischungen hiervon, auch separat von den weiteren Bestandteilen der Bindemittelzusammensetzung auf das lignocellulosehaltige Material aufgebracht werden. Das Aufbringen der getrennten Bestandteile kann simultan oder sequenziell erfolgen. Es können auch Einzelmischungen aus den Bestandteilen aufgebracht werden. Beispielsweise kann eine vorgefertigte Mischung aus Ligninsulfonat und Polyisocyanat getrennt von dem Aminoplastharz auf das lignocellulosehaltige Material aufgebracht werden. Die Bindemittelzusammensetzung kann also in Schritt B. als bereits hergestelltes Gemisch oder getrennt in Form ihrer Bestandteile auf das lignocellulosehaltige Material aufgebracht werden und sich dort *in situ* bilden.

Das Aufbringen erfolgt durch Inkontaktbringen des lignocellulosehaltigen Materials mit der Bindemittelzusammensetzung bzw. deren Bestandteile wie es dem Fachmann von der Beleimung von Holzpartikeln in der Holzwerkstoffproduktion allgemein bekannt ist. Das Aufbringen kann insbesondere durch Tränken oder Aufsprühen, insbesondere in einer Blowline, erfolgen. Das Aufbringen kann alternativ oder zusätzlich in einer Beleimtrommel erfolgen. Insbesondere kann das Aufbringen durch Düsen, beispielsweise mittels einer Zweistoffdüse, erfolgen.

Die Menge der in Schritt B aufgebrachten Bindemittelzusammensetzung beträgt vorzugsweise 1 bis 25 Gew.-%, insbesondere 3 bis 20 Gew.-%, noch bevorzugter 4 bis 17 Gew.-%, bezogen auf das Trockengewicht des lignocellulosehaltigen Materials (Festharz/atro). "Trockengewicht" oder "atro Holz", wie hierin verwendet, bezieht sich auf das Gewicht von darrtrockenem lignocellulosehaltigem Material, welches praktisch wasserfrei ist. Der darrtrockene Zustand des lignocellulosehaltigen Materials kann beispielsweise durch Lagerung bei einer Temperatur von 103 °C +/- 2 °C bis zur Gewichtskonstanz bzw. Massekonstanz erzielt werden. Das "Trockengewicht" ("atro Holz") eines Holzwerkstoffs wird bestimmt, indem zunächst der Feuchtegehalt von Prüfkörpern aus dem Holzwerkstoff nach DIN EN 322 ermittelt wird und dieses Ergebnis anschließend verwendet wird, um den Feuchtegehalt aus dem Holzwerkstoffgewicht zur Berechnung des Trockengewichts herauszurechnen. Für viele Anwendungen ist es besonders praxisgerecht, wenn das Bindemittel in einer Menge von 1 bis 25 Gew.-%, insbesondere 3 bis 15 Gew.-%, jeweils bezogen auf das Trockengewicht des lignocellulosehaltigen Materials (Festharz/atro) eingesetzt wird.

In Schritt C. des erfindungsgemäßen Verfahrens wird das mit der Bindemittelzusammensetzung bzw. deren Bestandteilen beleimte lignocellulosehaltige Material zu einem Holzwerkstoff verpresst. Die Verpressung erfolgt nach Verfahren zur Herstellung von Holzwerkstoffen, die dem Fachmann wohlbekannt sind. Grundsätzlich sind dem Fachmann verschiedene Methoden bekannt, um Holzwerkstoffe durch Verpressen herzustellen. Das Verpressen findet üblicherweise unter erhöhter Temperatur, insbesondere bei 100 °C bis 250 °C statt. Typischerweise handelt es sich bei Schritt C. um eine Heißverpressung. Optimale Ergebnisse können erzielt werden, wenn der Pressfaktor beim Pressen von 2 bis 10 s/mm, bevorzugt von 3 bis 6 s/mm, beträgt. Unter Pressfaktor wird hier insbesondere die Verweilzeit des lignocellulosehaltigen Holzwerkstoffs in Sekunden je Millimeter Dicke oder Stärke des fertigen gepressten lignocellulosehaltigen Holzwerkstoffs in der Presse verstanden.

Geeignete Temperaturen für das Verpressen in Schritt C. des erfindungsgemäßen Verfahrens oder einer seiner Ausführungsformen sind Temperaturen von 100 °C bis 250 °C, insbesondere 150 °C bis 250 °C, bevorzugt von 160 °C bis 240 °C, insbesondere bevorzugt von 180 °C bis 230 °C. Bei Temperaturen in diesen Bereichen kann das Verfahren besonders wirtschaftlich durchgeführt werden.

Mit der Anwendung des erfindungsgemäßen Verfahrens wird der Nachteil des kostspieligen Einsatzes von PMDI gemindert, wobei gleichzeitig die Vorteile von PMDI bei Verwendung in aminoplastbasierten Bindemitteln gewahrt bleiben. Das erfindungsgemäße Verfahren ist insgesamt besonders kostengünstig, effektiv und umweltschonend, da Teile des teuren Rohstoff PMDI eingespart werden können. Zudem wirkt das kostengünstige biobasierte Ligninsulfonat nicht nur als Substitut für PMDI sondern auch als Emulgator bzw. Reaktivphasenvermittler für das Aminoplastharz.

### Holzwerkstoffe

Die Erfindung stellt ferner auch Holzwerkstoffe bereit, die durch das erfindungsgemäße Verfahren erhältlich sind bzw. ein Reaktionsprodukt einer hier beschriebenen, erfindungsgemäßen Bindemittelzusammensetzung enthalten.

Wenn hier oder an anderer Stelle von "Reaktionsprodukt" die Rede ist, dann ist damit das Produkt der Reaktion der Bindemittelbestandteile, d.h. das Produkt der Vernetzungsreaktion, gemeint, wobei neue kovalente Bindungen zwischen den Bindemittelbestandteilen geknüpft werden. Im Falle der erfindungsgemäßen Bindemittelzusammensetzung ist das Reaktionsprodukt typischerweise ein Aminoplast, in den das Polyisocyanat und das Ligninsulfonat einpolymerisiert ist. An Stelle von "Reaktionsprodukt" kann auch von "ausgehärteter Bindemittelzusammensetzung" gesprochen werden.

In einer Ausführungsform enthält der Holzwerkstoff das Reaktionsprodukt in einer Menge von 2 bis 25 Gew.-% bezogen auf das Trockengewicht des Holzwerkstoffs. Durch die Nachweisbarkeit der Bestandteile Aminoplastharz, Polyisocyanat und Ligninsulfonat bzw. die Nachweisbarkeit deren Reaktionsprodukte, kann der Fachmann erfindungsgemäße Holzwerkstoffe und Bindemittelzusammensetzungen einfach von den bereits aus dem Stand der Technik bekannten Holzwerkstoffen unterscheiden.

Erfindungsgemäße Holzwerkstoffe lassen sich besonders gut zur Herstellung eines Laminats, Bodenbelags, einer Arbeitsplatte, Tischplatte oder eines Möbelstücks verwenden. Wenn hier von "Holzwerkstoffen" die Rede ist, so sind damit alle Werkstoffe gemeint, die lignocellulosisches Material, insbesondere Holz, enthalten. Holzwerkstoffe im Sinne der Erfindung sind insbesondere ausgewählt aus der Gruppe bestehend aus Spanplatte, OSB-Platte, Faserplatte, furnierbasierender Holzwerkstoff, einem Faserformteil oder Spanholzformteil. Erfindungsgemäße Holzwerkstoffe sind insbesondere Span- oder Faserplatten.

Gemäß einer Ausführungsform handelt es sich bei dem erfindungsgemäßen Holzwerkstoff um einen Holzspanwerkstoff, insbesondere eine Span- oder OSB-Platte. Wenn hier von "Spanplatte" die Rede ist, dann werden darunter Spanplatten im weiteren Sinne verstanden, nämlich Holzwerkstoffe, die aus spanend hergestellten Holzpartikeln und mindestens einem Bindemittel mittels Wärme und Druck hergestellt werden. Eine andere Produktgruppe im Bereich der Holzwerkstoffe, die nicht von dem Begriff "Holzspanwerkstoff" oder "Spanplatte" wie hier verwendet umfasst ist, stellen die Holzfaserwerkstoffe dar. Zu letzteren gehören Faserplatten, wie beispielsweise die mitteldichten (MDF) und hochdichten (HDF) Faserplatten.

Grundsätzlich kennt der Fachmann unterschiedliche Holzspanwerkstoffe. Beispiele hierfür sind Spanplatten, Flachpressplatten, Einschichtplatten, Mehrschichtplatten, leichte Flachpressplatten, Strangpressplatten, Strangpressröhrenplatten (ET - Extruded Tubular), Strangpressvollplatten (ES - Extruded Solid), kunststoffbeschichtete dekorative Flachpressplatten (MFB - Melamine Faced Board), Spanholzformteile oder Grobspanplatten (OSB - Oriented Strand Board). Die Einteilung der Spanplatten kann nach DIN EN 312 erfolgen, wobei sich die Spanplatten in Festigkeit und Feuchtebeständigkeit unterscheiden können. OSB-Platten können gemäß ihrer Verwendung nach EN 300 eingeteilt werden. Solche Holzspanwerkstoffe können beispielsweise zu Laminaten, Bodenbelägen, Arbeitsplatten, Tischplatten, Paletten und/oder Holzformteilen weiterverarbeitet werden.

Gemäß einer Ausführungsform der Erfindung ist der Holzwerkstoff eine Holzspanwerkstoffplatte. Vorzugsweise ist der Holzwerkstoff eine Span- oder OSB-Platte. Praktische Versuche haben gezeigt, dass sich das erfindungsgemäße Verfahren sowie die beschriebenen Ausführungsformen besonders gut zur Herstellung von gepressten Holzspanwerkstoffen, insbesondere zur Herstellung von Span- und OSB-Platten eignen.

Gemäß einer anderen Ausführungsform handelt es sich bei dem erfindungsgemäßen Holzwerkstoff um eine Faserplatte.

Vorzugsweise besteht der offenbarte Holzwerkstoff im Wesentlichen aus lignocellulosehaltigem Material und Bindemitteln. "Im Wesentlichen" bedeutet hierbei zu über 70 Gew.-%, 85 Gew.-%, 95 Gew.-% oder 97 Gew.-%, jeweils bezogen auf das Gesamtgewicht des Holzwerkstoffs.

### Verwendung

Praktische Versuche haben gezeigt, dass sich die erfindungsgemäßen Bindemittelzusammensetzungen hervorragend zur Holzwerkstoffproduktion eignen. Sie können jedoch auch zur Verklebung von Holzwerkstoffen oder Holz mit anderen Materialien eingesetzt werden, insbesondere zur Veredelung (z.B. Oberflächenveredelung) des Holzwerkstoffs oder des Holzes mit diversen Beschichtungsstoffen. Durch eine Verklebung bzw. Veredelung des Holzwerkstoffes oder des Holzes mit mindestens einem Beschichtungsstoff kann die Optik und/oder Haptik der Oberfläche des Holzwerkstoffs oder des Holzes verändert und eingestellt werden. Eine Verwendung der erfindungsgemäßen Bindemittelzusammensetzungen ist insbesondere als Flächenleim auf Holzwerkstoff- oder Holzoberflächen möglich.

In einer Ausführungsform betrifft die Erfindung die Verwendung erfindungsgemäßer Bindemittelzusammensetzungen als Flächenleim zur Applikation von Beschichtungsstoffen auf einem Untergrund. Erfindungsgemäß ist dabei entweder der Beschichtungsstoff oder der Untergrund Holz oder ein Holzwerkstoff. In einer besonders bevorzugten Ausführungsform ist der Beschichtungsstoff ein Furnier. In einer weiteren Ausführungsform werden verschiedene Beschichtungsstoffe auf den Untergrund aufgebracht.

Die erfindungsgemäße Bindemittelzusammensetzung kann als Flächenleim in einer Menge von 10 bis 150 g/m² auf den Untergrund aufgetragen werden. Besonders praxisgerechte Ergebnisse stellen sich ein, wenn die als Flächenleim eingesetzte Bindemittelzusammensetzung in einer Menge von 20 bis 150 g/m² oder noch bevorzugter 50 bis 150 g/m² verwendet wird. Maßgeblich für die Menge an Flächenleim ist dabei die Saugfähigkeit des Untergrundes. Die Mengenangabe des einzusetzenden Flächenleims in Gramm (g) für einen Quadratmeter (m²) des Untergrundes bezieht sich dabei auf den Feststoffanteil des Flächenleims bzw. der Bindemittelzusammensetzung.

### BEISPIELE

Das folgende Ausführungsbeispiel dient der näheren Erläuterung der Erfindung, insbesondere in Bezug auf bestimmte Ausführungsformen der Erfindung. Das Ausführungsbeispiel soll jedoch die vorliegende Offenbarung nicht einschränken.

Die folgenden Abkürzungen werden verwendet:
- atro: absolut trocken, wobei zunächst der Feuchtegehalt des Holzwerkstoffs nach DIN EN 322 bestimmt wird und dieses Ergebnis anschließend verwendet wird, um den Feuchtegehalt herauszurechnen.
- LS: Magnesium-Ligninsulfonat, Collex 55 G, Sappi Biotech GmbH Polymeres Diphenylmethandiisocyanat, Ongronat^{®} WO 2750,
- PMDI: BorsodChem Chemistry for generations
- REF: Referenzplatte 8% (w/v) wässriges Harnstoff-Formaldehyd-Kondensationsprodukt,
- UF: Primere^{™} 10F102, metadynea

Es wurden 16 mm dicke Spanplatten mit einer Zieldichte von 650 kg/m³ hergestellt.

Die Beleimung der Späne wurde wie folgt durchgeführt: 8% Harnstoff-Formaldehyd-Leim wurde vermischt mit wässriger 60%iger (w/v) Ammoniumnitratlösung (Top Chem Chemikalienhandel GmbH) in der Dosierung von 3% (fest/Festharz). Dieses Gemisch wurde mit PMDI oder einer PMDI-LS Mischung verrührt. Das so erhaltene UF/PMDI oder UF/PMDI/LS Gemisch wurde anschließend auf die Späne aufgesprüht.

Die beleimten Späne wurden zu einem Spänekuchen gestreut und heißverpresst bei einer Presstemperatur von 220 °C. Die Pressungen erfolgten bei einem Pressdruck von maximal 150 bar, einem Pressfaktor von 8 Sekunden/mm und somit einer Pressdauer von 128 Sekunden. Der spezifische Pressdruck betrug 583 N/m². Alle Platten der Versuchsreihe wiesen einen einschichtigen Aufbau auf.

Die hergestellten Spanplatten wurden bezüglich der plattenrelevanten Kenngrößen Querzugfestigkeit, Quellung und Wasseraufnahme untersucht. Die Querzugfestigkeit wurde mittels der EN 319 an der Zwick-Roell Zmart.Pro ermittelt. Die Quellung wurde nach EN 317 gemessen. Die Wasseraufnahme wurde nach Verbleib der Platten für 24 Stunden im Quellbecken untersucht.

In Tabelle 1 sind die Versuchsparameter der hergestellten Platten und die Messergebnisse für die Querzugfestigkeit, Quellung und Wasseraufnahme der Versuchsplatten zusammengefasst.

Die Messwerte aus Tabelle 1 sind die Mittelwerte aus 10 Einzelmessungen.

**Tabelle 1:**

| | Querzugfestigkeit | | | Quellung und Wasseraufnahme | | | |
|---|---|---|---|---|---|---|---|
| Versuchsparameter | Dicke | Dichte | Querzug | Dicke | Dichte | Quellung | Wasseraufnahme |
| [% (fest/atro)] | mm | kg/m³ | N/mm² | mm | kg/m³ | % | % |
| 8 Gew.-% UF + 0,3 Gew.-%PMDI (REF1) | 16,49 | 631,80 | 0,49 | 16,47 | 638,97 | 20,19 | 82,40 |
| 8 Gew.-% UF + 0,2 Gew.-% PMDI (REF2) | 16,39 | 639,78 | 0,46 | 16,43 | 631,95 | 20,68 | 84,19 |
| 8 Gew.-% UF + 0,2 % PMDI + 0,1 Gew.-% LS | 16,45 | 642,13 | 0,49 | 16,50 | 642,59 | 20,31 | 82,59 |

Im Rahmen dieses Versuches sollte zunächst gezeigt werden, dass es durch eine Erniedrigung des PMDI Anteils im UF/PMDI Bindemittelgemisch zu einer Verschlechterung der Querzugsfestigkeit und einer Erhöhung der Quelleigenschaften sowie der Wasseraufnahme der damit hergestellten Spanplatten kommt (siehe Tabelle 1, vergleiche REF1 und REF2). Eine Erniedrigung der PMDI-Menge ohne diese negativen Folgen war jedoch möglich, wenn im UF-basierten Bindemittel ein Teil des PMDI durch LS ersetzt wurde (33 %ige Substitution). Hierbei wurden die Plattenkenngrößen Querzugfestigkeit, Quellung und Wasseraufnahme derart beleimter Platten nicht negativ beeinflusst. Auch im Hinblick auf die Prozessstabilität verhielt sich die erfindungsgemäße Bindemittelzusammensetzung wie die REF1 Platte.

## Patentansprüche

1. Bindemittelzusammensetzung zur Herstellung und/oder Veredelung von Holzwerkstoffen enthaltend die folgenden Bindemittelbestandteile
i) 3 bis 15 Gew.-% Aminoplastharz;
ii.1) 0,15 bis 1,5 Gew.-% Polyisocyanat; und
ii.2) 0,0003 bis 0,9 Gew. % Ligninsulfonat;
wobei die Gew.-%-Angaben der Bestandteile i), ii.1) und ii.2) bezogen sind auf das Trockengewicht des lignocellulosehaltigen Materials, auf welches die Bindemittelzusammensetzung aufgebracht wird.

2. Bindemittelzusammensetzung nach Anspruch 1, **dadurch gekennzeichnet, dass** das Aminoplastharz ausgewählt ist aus der Gruppe bestehend aus Harnstoff-Formaldehyd-Harz (UF), Melamin-Formaldehyd (MF), Melamin-Harnstoff-Formaldehyd-Harz (MUF), Melamin-Phenol-Formaldehyd (MPF), Melamin-Harnstoff-Phenol-Formaldehyd-Harz (MUPF) und Mischungen hiervon.

3. Bindemittelzusammensetzung nach Anspruch 1 oder 2, **dadurch gekennzeichnet, dass** das Polyisocyanat ein aromatisches Polyisocyanat ist, insbesondere ausgewählt aus der Gruppe bestehend aus Diphenylmethandiisocyanat (MDI) und polymeren Diphenylmethandiisocyanat (PMDI).

4. Holzwerkstoff enthaltend ein Reaktionsprodukt der in einem der Ansprüche 1 bis 3 angegebenen Bindemittelzusammensetzung, wobei Reaktionsprodukt die ausgehärtete Bindemittelzusammensetzung bedeutet.

5. Holzwerkstoff nach Anspruch 4, **dadurch gekennzeichnet, dass** der Holzwerkstoff das Reaktionsprodukt in einer Menge von 2 bis 25 Gew.-% bezogen auf das Trockengewicht des Holzwerkstoffs enthält.

6. Verfahren zur Herstellung eines Holzwerkstoffs, umfassend mindestens die folgenden Schritte:
A. Bereitstellen von lignocellulosehaltigem Material;
B. Aufbringen der Bindemittelzusammensetzung nach einem der Ansprüche 1 bis 3 auf das lignocellulosehaltige Material;
C. Verpressen der Mischung aus Schritt B zu einem Holzwerkstoff.

7. Verfahren nach Anspruch 6, **dadurch gekennzeichnet, dass** die Bindemittelzusammensetzung in Schritt B als Gemisch oder getrennt in Form ihrer Bindemittelbestandteile oder in Form von Einzelmischungen hieraus auf das lignocellulosehaltige Material aufgebracht wird.

8. Verfahren nach einem der Ansprüche 6 oder 7, **dadurch gekennzeichnet, dass** das lignocellulosehaltige Material ein holzenthaltendes Material ist oder aus Holz besteht, insbesondere wobei das lignocellulosehaltige Material ausgewählt ist aus der Gruppe bestehend aus Holzmehl, Holzfasern, Holzspänen, Holzstrands und Hackschnitzeln.

9. Holzwerkstoff, erhältlich nach einem Verfahren gemäß einem der Ansprüche 6 bis 8.

10. Holzwerkstoff nach einem der Ansprüche 4, 5 oder 9, **dadurch gekennzeichnet, dass** der Holzwerkstoff ausgewählt ist aus der Gruppe bestehend aus einer Spanplatte, OSB-Platte, Faserplatte, einem furnierbasiertem Holzwerkstoff, einem Faserformteil oder Spanholzformteil.

11. Verwendung von Ligninsulfonat in einer Bindemittelzusammensetzung als Emulgator und Reaktivphasenvermittler zwischen einem Polyisocyanat und einem Aminoplastharz, wobei
- Emulgator bedeutet, dass dieser mindestens zwei nicht oder schlecht miteinander mischbare Phasen zu einer Dispersion vermengt und stabilisiert; und
- Reaktivphasenvermittler bedeutet, dass dieser durch kovalente Reaktionen an der Phasengrenzfläche für eine Kopplung und Kompatibilisierung, und damit einhergehend für eine bessere Phasendurchmischung, von mindestens zwei ursprünglich schlecht oder nicht miteinander mischbaren Phasen sorgt.

12. Verwendung einer Bindemittelzusammensetzung nach einem der Ansprüche 1 bis 3 als Flächenleim zur Applikation von Beschichtungsstoffen auf einem Untergrund, wobei entweder der Beschichtungsstoff oder der Untergrund Holz oder ein Holzwerkstoff ist.

## Claims

1. Binder composition for manufacturing and/or finishing wood-based materials, containing the following adhesive composition constituents
i) 3 to 15 wt.% amino resin;
ii.1) 0.15 to 1.5 wt.% polyisocyanate; and
ii.2) 0.0003 to 0.9 wt.% lignin sulfonate;
wherein the weight percentage figures for the constituents i), ii.1), and ii.2) are based on the dry weight of the lignocellulosic material to which the adhesive composition is applied.

2. Binder composition according to claim 1, **characterized in that** the amino resin is selected from the group consisting of urea formaldehyde resin (UF), melamine formaldehyde (MF), melamine urea formaldehyde resin (MUF), melamine phenol formaldehyde (MPF), melamine urea phenol formaldehyde resin (MUPF), and mixtures thereof.

3. Binder composition according to claim 1 or 2, **characterized in that** the polyisocyanate is an aromatic polyisocyanate, in particular selected from the group consisting of diphenylmethane diisocyanate (MDI) and polymeric diphenylmethane diisocyanate (PMDI).

4. Wood-based material containing a reaction product of the adhesive composition specified in any one of claims 1 to 3, wherein reaction product means the cured adhesive composition.

5. Wood-based material according to claim 4, **characterized in that** the wood-based material contains the reaction product in an amount of 2 to 25 wt.% based on the dry weight of the wood-based material.

6. Method for manufacturing a wood-based material, comprising at least the following steps:
A. providing lignocellulosic material;
B. applying the adhesive composition according to any one of claims 1 to 3 to the lignocellulosic material;
C. compressing the mixture from step B to form a wood-based material.

7. Method according to claim 6, **characterized in that,** in step B, the adhesive composition is applied to the lignocellulosic material as a mixture, or separately in the form of its adhesive constituents, or in the form of separate mixtures thereof.

8. Method according to one of claims 6 or 7, **characterized in that** the lignocellulosic material is a wood-containing material or consists of wood, especially wherein the lignocellulosic material is selected from the group consisting of wood flour, wood fibers, wood shavings, wood strands, and chips.

9. Wood-based material obtainable in accordance with a method according to any one of claims 6 to 8.

10. Wood-based material according to any one of claims 4, 5, or 9, **characterized in that** the wood-based material is selected from the group consisting of a chipboard, OSB board, fiber board, a veneer-based wooden material, a fiber molding, or a chipboard molding.

11. Use of lignin sulfonate in an adhesive composition as an emulsifier and reactive phase mediator between a polyisocyanate and an amino resin, wherein
- emulsifier means that this blends and stabilizes at least two immiscible or poorly miscible phases to form a dispersion; and
- reactive phase mediator means that this, via covalent reactions at the phase interface, ensures a coupling and compatibilization, and thus concomitantly a better phase mixing, of at least two phases that are originally poorly miscible or immiscible.

12. Use of an adhesive composition according to any one of claims 1 to 3 as a surface adhesive for applying coating materials to a substrate, wherein either the coating material or the substrate is wood or a wood-based material.

## Revendications

1. Composition de liant destinée à la fabrication et/ou l'affinage de matériaux dérivés du bois contenant les composants de liant suivants
i) 3 à 15 % en poids de résine aminoplaste ;
ii.1) 0,15 à 1,5 % en poids de polyisocyanate ; et
ii.2) 0,0003 à 0,9 % en poids de sulfonate de lignine ;
les indications de pourcentage en poids des composants i), ii.1) et ii.2) étant basées sur le poids sec du matériau contenant de la lignocellulose, sur lequel la composition de liant est appliquée.

2. Composition de liant selon la revendication 1, **caractérisée en ce que** la résine aminoplaste est choisie dans le groupe constitué par la résine uréeformaldéhyde (UF), le mélamine-formaldéhyde (MF), la résine mélamine-urée-formaldéhyde (MUF), le mélanine-phénol-formaldéhyde (MPF), la résine mélanine-urée-phénol-formaldéhyde (MPUF) et des mélanges de ceux-ci.

3. Composition de liant selon la revendication 1 ou 2, **caractérisée en ce que** le polyisocyanate est un polyisocyanate aromatique, en particulier choisi dans le groupe constitué par le diphénylméthane diisocyanate (MDI) et le diphénylméthane diisocyanate polymérique (PMDI).

4. Matériau dérivé du bois contenant un produit de réaction de la composition de liant indiqué dans les revendications 1 à 3, le produit de réaction signifiant la composition de liant durcie.

5. Matériau dérivé du bois selon la revendication 4, **caractérisé en ce que** le matériau dérivé du bois contient le produit de réaction en une quantité allant de 2 à 25 % en poids par rapport au poids sec du matériau dérivé du bois.

6. Procédé pour la fabrication d'un matériau dérivé du bois, comprenant au moins les étapes suivantes :
A. fourniture d'un matériau contenant de la lignocellulose ;
B. application de la composition de liant selon l'une quelconque des revendications 1 à 3 sur le matériau contenant de la lignocellulose ;
C. compression du mélange de l'étape B en un matériau dérivé du bois.

7. Procédé selon la revendication 6, **caractérisé en ce que** la composition de liant est appliquée sur le matériau contenant de la lignocellulose à l'étape B en mélange ou séparément sous forme de ses composants de liant ou sous forme de mélanges individuels de ceux-ci.

8. Procédé selon l'une quelconque des revendications 6 ou 7, **caractérisé en ce que** le matériau contenant de la lignocellulose et un matériau contenant du bois ou est constitué de bois, le matériau contenant de la lignocellulose étant en particulier choisi dans le groupe constitué par la farine de bois, les fibres de bois, les copeaux de bois, les plaques de bois et les plaquettes de bois.

9. Matériau dérivé du bois pouvant être obtenu par un procédé selon l'une quelconque des revendications 6 à 8.

10. Matériau dérivé du bois selon l'une quelconque des revendications 4, 5 ou 9, **caractérisé en ce que** le matériau dérivé du bois est choisi dans le groupe constitué d'un panneau de particules, d'un panneau à copeaux orientés, d'un panneau de fibres, d'un matériau dérivé du bois à base de placage, d'une pièce moulée en fibres ou d'une pièce moulée en aggloméré.

11. Utilisation de sulfonate de lignine dans une composition de liant comme émulsifiant et agent de phases réactif entre un polyisocyanate et une résine aminoplaste, dans laquelle
- émulsifiant signifie que celui-ci mélange et stabilise au moins deux phases peu ou pas miscibles entre elles en une dispersion ; et
- agent de phases réactif signifie que celui-ci assure, par des réactions covalentes à la surface limite des phases, un couplage et une compatibilisation, et donc pour un meilleur mélange d'au moins deux phases originalement peu ou pas miscibles entre elles.

12. Utilisation d'une composition de liant selon l'une quelconque des revendications 1 à 3 comme colle de surface pour l'application de matériaux de revêtement sur un fond, le matériau de revêtement ou le fond étant du bois ou un matériau dérivé du bois.
